# EUROPEAN PATENT APPLICATION

(11) **EP 2 284 636 A2**
(43) Date of publication of application: **16.02.2011**
(21) Application number: 10169410.7
(22) Date of filing: 13.07.2010
(51) Int. Cl.: G05D 1/02

(54) **Floor tile comprising guidance means for an automatic guided vehicle**

(30) Priority: 14.08.2009 GB 0914204
(71) Applicant: The Automation Group Limited, Gateshead Tyne and Wear NE10 0ES (GB)
(72) Inventor: Smith, Christopher, Ashington, Northumberland NE63 8EX (GB)
(74) Representative: Byworth, Ian James

(57) **Abstract**

A plurality of tiles 2 assembled into a flooring assembly is disclosed. A guidance strip 10 forms a track to be followed by an automatic guided vehicle (AGV) and marker tags such as radio frequency identification (RFID) tags 8 are disposed at points along the track to provide information usable for guiding an AGV moving along the track.

## Description

The present invention relates to a floor tile comprising guidance means arranged to provide information to a sensor means of an automatic guided vehicle moveable over the tile, and relates particularly, but not exclusively, to a flooring assembly comprising an arrangement of a plurality of floor tiles.

Automatic guided vehicles (AGVs) are vehicles used in factories and other premises which are automated and are adapted to follow routing information to move between various locations and perform various tasks. For example, an AGV may be used to automatically move and retrieve items being stored in a warehouse.

EP0956523 describes a method of guiding AGVs that comprises a plurality of wires embedded in a factory floor that form a track for the AGV to follow. A plurality of radio frequency identification (RFID) tags are also embedded in the floor and provide routing information to the AGV at junctions and information identifying work stations etc. The wires are therefore analogous to a track and the RFID tags are analogous to signposts. The AGV comprises an RFID tag reader which creates an electromagnetic field to excite an RFID tag in the vicinity of the RFID tag reader. The excited RFID tag then transmits coded information as a result of the excitation. The coded information provides routing information to the tag reader on the AGV.

This system suffers from the drawback that the RFID tags are frequently embedded in the concrete floor and cannot be easily moved in the event that the AGV route requires changing. The RFID tags can also be mounted on the surface of the floor, but in this case they are susceptible to damage from pedestrians and vehicular traffic, for example fork-lift trucks. The RFID tags can also form trip hazards. If the track or RFID tags become damaged or displaced, the AGV system malfunctions and may have to be closed down for repair.

AGV systems also frequently use magnetic, conductive or reflective adhesive tape to form a track that can be followed by a suitable sensor on the AGV. This tape is generally not reusable and is susceptible to damage as a result of being laid on the surface of the floor.

US4864207 describes a guidance system for an unmanned vehicle. The guide lane pattern is formed by a square lattice of material that is arranged to be detected by sensors on an unmanned vehicle. The sensors detect the location of the lattice and perform onboard processing to move between predetermined locations. Consequently, the vehicle of US4864207 must be able to calculate its location on the lattice. This system therefore suffers from the drawback that the onboard detection and processing requirements increase the cost and complexity of the system. Also, the configurations of the tiles disclosed in US4864207 only enable square lattices and no other floor pattern to be constructed.

WO2009/097608 defines a floor cleaning machine and floor tile system in which each tile comprises an RFID tag. The RFID tags identify a specified radius around the tag to be cleaned or control a specified area adjacent and at one side of the tag to be cleaned. The system of WO2009/097608 suffers from the drawback that no guidance is provided by the RFID tags which merely define areas to be cleaned. The cleaning apparatus must also be pre-programmed with guidance instructions. This undesirably increases the amount of input required by the user.

US2007/0069021 describes a lattice of floor tiles having RFID tags and pressure operated transducers. When a robot moves over a tile, the pressure is sensed and the RFID tag activated. The RFID tag then communicates with the robot to provide directional instructions. The system of US2007/0069021 suffers from the drawback that a large amount of processing is required to provide guidance from the pressure activated RFID sensors. This increases the cost and complexity of the system.

Preferred embodiments of the present invention seek to overcome the above disadvantages of the prior art.

According to an aspect of the present invention, there is provided a floor tile comprising guidance means arranged to provide information to a sensor means of an automatic guided vehicle moveable over the tile, the information usable to guide the movement of said automatic guided vehicle, wherein the guidance means comprises:
a guidance strip that is arranged to be followed by an automatic guided vehicle; and
at least one marker tag arranged to provide routing information and/or instructions to perform a task to an automatic guided vehicle moving over said tile.

This provides the advantage of enabling easy laying of flooring that is suitable for guiding AGVs. The guidance strip forms a track that can be followed by the AGV, and the marker tag provides routing information (analogous to a signpost) to direct the AGV at junctions. The marker tags may also provide instructions to perform a task, such as pick up or drop off an item. This advantageously reduces the amount of onboard processing required by the AGV, or pre-programming required by a user because the user can simply choose a floor configuration required and install suitable tiles.

This also provides the advantage that if the guidance means on the tile becomes damaged, the tile can quickly be replaced which speeds up repair and reduces the amount of time the AGV system is inoperative. Also, the tiles can be lifted from one location and laid at another location which simplifies and reduces the cost of moving the location of an AGV system. It is also relatively straightforward to add extra tiles and therefore extend an AGV system.

Said guidance means may be arranged on an underside of the tile.

This provides the advantage of protecting the guidance means without having to embed the guidance means during construction of a floor.

The floor tile may further comprise at least one indentation formed in the floor tile into which at least one said marker tag is arranged to be embedded.

This provides the advantage of a straightforward method of mounting a marker tag to the tile, in a manner which protects the tag.

The floor tile may further comprise a hole formed through the tile into which at least one said marker tag is arranged to be inserted.

This provides the advantage of a straightforward method of mounting a marker tag to the tile, in a manner which protects the tag.

At least one said marker tag may comprise at least one radio frequency identification tag.

At least one said marker tag may comprise a reflective or magnetic dot.

In a preferred embodiment, a path defined by the guidance strip does not bisect a straight edge of the floor tile.

This provides the advantage that the path on a tile is not centrally positioned but is offset so that the tile can be rotated through 180 degrees to provide different lane spacings when two guide paths are required to run parallel to one another.

In a preferred embodiment, a path defined by the guidance strip does not follow a perpendicular bisector of the floor tile.

This provides the advantage that the path on a tile is not centrally positioned but is offset so that the tile can be rotated through 180 degrees to provide different lane spacings when two guide paths are required to run parallel to one another.

In a preferred embodiment, a path defined by the guidance strip does not run along an edge of the floor tile.

This provides the advantage that the path on a tile is not positioned on an edge of the tile but is offset so that the tile can be rotated through 180 degrees to provide different lane spacings when two guide paths are required to run parallel to one another.

In a preferred embodiment, the floor tile is quadrilateral and wherein a path defined by the guidance strip forms one of the following configurations:
g) a path interconnecting two opposite sides of the quadrilateral;
h) a path interconnecting two adjacent sides of the quadrilateral;
i) a path interconnecting three adjacent sides of the quadrilateral by means of a substantially T-shaped junction; or
j) a path interconnecting all four sides of the quadrilateral by means of a crossroads.

This provides the advantage of a set of quadrilateral tiles that can be used to lay almost any desirable configuration on a floor on which the floor tiles are to be used. Consequently, a potential user of the tiles can work out which different tiles are required, and how many of each, in order to provide flooring suitable for using an AGV system for their own purposes. Alternatively, software such as a parametric modelling CAD system can automatically select tiles to design a tile layout for a specified AGV system.

According to another aspect of the present invention, there is provided a floor tile comprising a guidance strip that is arranged to be followed by an automatic guided vehicle, wherein a path defined by the guidance strip:
does not bisect a straight edge of the floor tile;
does not follow a perpendicular bisector of the floor tile; and
does not run along an edge of the floor tile.

This provides the advantage that the path on a tile is not centrally positioned or edge positioned but is offset so that the tile can be rotated through 180 degrees to provide different lane spacings when two guide paths are required to run parallel to one another. This provides a highly versatile set of tiles that can be used to fit almost any track requirement for different sizes and configurations of floor space and different sizes of AGV.

In a preferred embodiment, the floor tile is quadrilateral and wherein a path defined by the guidance strip forms one of the following configurations:
g) a path interconnecting two opposite sides of the quadrilateral;
h) a path interconnecting two adjacent sides of the quadrilateral;
i) a path interconnecting three adjacent sides of the quadrilateral by means of a substantially T-shaped junction; or
j) a path interconnecting all four sides of the quadrilateral by means of a crossroads.

This provides the advantage of a set of quadrilateral tiles that can be used to lay almost any desirable configuration on a floor on which the floor tiles are to be used. Consequently, a potential user of the tiles can work out which different tiles are required, and how many of each, in order to provide flooring suitable for using an AGV system for their own purposes. Alternatively, software such as a parametric modelling CAD system can automatically select tiles to design a tile layout for a specified AGV system.

The floor tile may further comprise at least one marker tag arranged to provide routing information and/or instructions to perform a task to an automatic guided vehicle moving over said tile.

This provides the advantage of enabling easy laying of flooring that is suitable for guiding AGVs. The guidance strip forms a track that can be followed by the AGV, and the marker tag provides routing information (analogous to a signpost) to direct the AGV at junctions. The marker tags may also provide instructions to perform a task, such as pick up or drop off an item. This advantageously reduces the amount of onboard processing required by the AGV, or pre-programming required by a user because the user can simply choose a floor configuration required and install suitable tiles.

This also provides the advantage that if the guidance means on the tile becomes damaged, the tile can quickly be replaced which speeds up repair and reduces the amount of time the AGV system is inoperative. Also, the tiles can be lifted from one location and laid at another location which simplifies and reduces the cost of moving the location of an AGV system. It is also relatively straightforward to add extra tiles and therefore extend an AGV system.

The floor tile may further comprise one or more of the following features:
k) wherein at least one said marker tag is arranged on an underside of the floor tile;
l) wherein at least one indentation is formed in the floor tile into which at least one said marker tag is arranged to be embedded; or
m) wherein a hole is formed through the tile into which at least one said marker tag is arranged to be inserted.

This provides the advantage of protecting the guidance means without having to embed the guidance means during construction of a floor. This also provides the advantage of a straightforward method of mounting a marker tag to the tile, in a manner which protects the tag.

At least one said marker tag may comprise at least one radio frequency identification tag.

At least one said marker tag may comprise a reflective or magnetic dot.

Said guidance strip may comprise one of the following:
n) a ridge formed on the surface of the tile;
o) a bar mounted to the tile;
p) a magnetic material;
q) a metallic material;
r) a reflective material; or
s) a wire for conveying electrical signals.

The floor tile may further comprise interconnection means arranged on an outer periphery of said tile to enable the tile to be interconnected to another tile.

This provides the advantage of helping to prevent the tiles becoming undesirably moved around and lifted from the floor on which they are assembled.

Said interconnection means may comprise a plurality of interlocking tabs.

The floor tile may further comprise at least one collared pin projecting through an underside of the tile, the collared pin arranged to receive a bolt for attaching fixtures to the tile.

According to another aspect of the present invention, there is provided a flooring assembly comprising an arrangement of a plurality of floor tiles as defined above laid alongside one another.

The flooring assembly may further comprise a plurality of second tiles which do not comprise guidance means arranged to provide information to sensor means of an automatic guided vehicle moveable over the assembly.

Each said second tile has a colour different to the tiles of said plurality of floor tiles.

This provides a visual indication to a user of the path which the AGV will follow in the absence of a visible AGV guidance strip. This improves safety and helps to reduce congestion in the area in which the AGV operates.

According to a further aspect of the present invention, there is provided a method of laying a flooring assembly arranged to provide information to a sensor means of an automatic guided vehicle moveable over the flooring assembly, the information usable to guide the movement of said automatic guided vehicle, the method comprising laying a plurality of tiles as defined above alongside one other.

Preferred embodiments of the present invention will now be described, by way of example only and not in any limitative sense, with reference to the accompanying drawings in which:
Figure 1 is a perspective view of an underside of a tile embodying the present invention;
Figure 2 is a cross-sectional view of a tile embodying the present invention showing various examples of different types and position of guidance means;
Figure 3 is an assembly of a plurality of the tiles of Figures 1 and 2;
Figure 4 is a cross-sectional view of a tile showing a collared pin assembly;
Figure 5 is a plan view of a flooring assembly showing different coloured tiles to indicate the path of an AGV;
Figure 6 is a plan view corresponding to Figure 5 showing the position of the guidance strip for an AGV; and
Figure 7 is a representation showing a set of tiles from which any required flooring layout can be constructed.

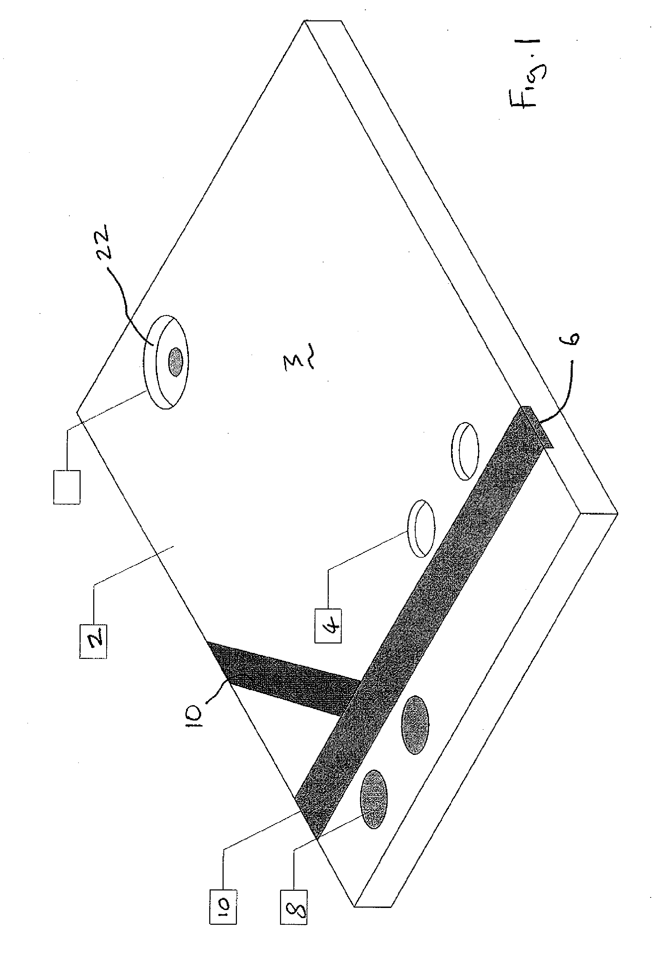

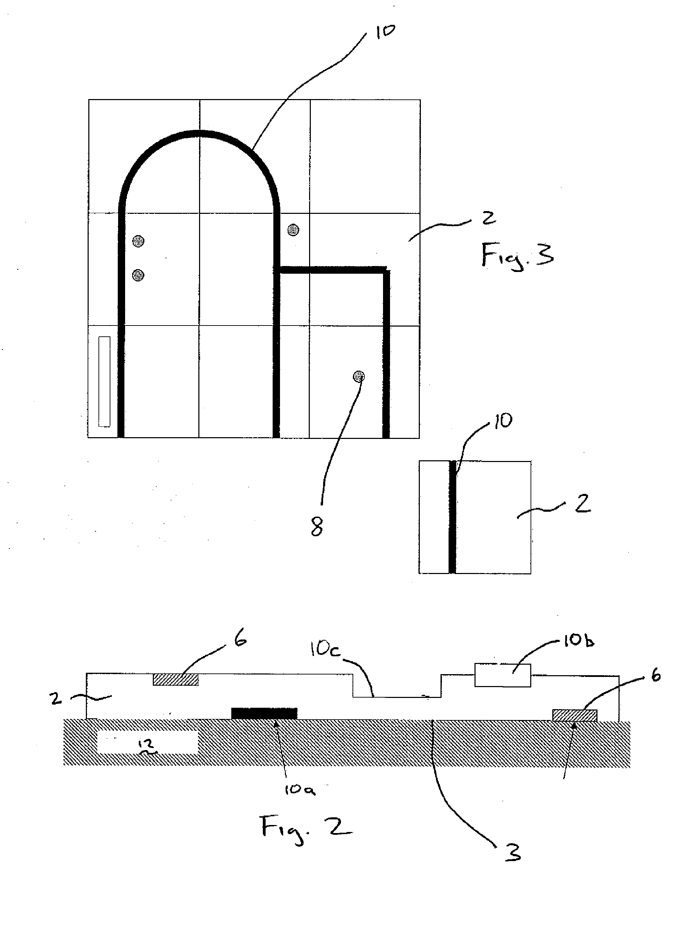

Referring to Figures 1 and 2, a tile 2 may be formed from durable plastics material and is suitable to be laid on a floor. An example of the use of the tile is on a factory or warehouse floor. The durable plastics material is therefore strong enough to carry heavy loads such as a rack of engineering parts and vehicles such as fork lift trucks etc. The tile 2 is laid on floor 12.

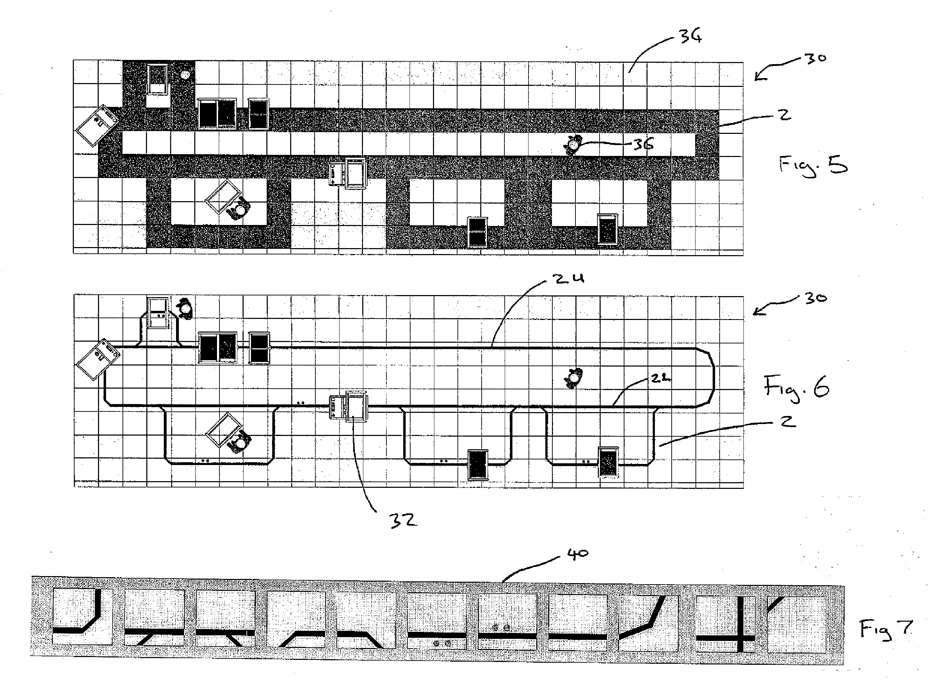

A plurality of circular indentations 4 and elongate indentations 6 are formed in the underside of the tile. However, the indentations can also be located on the top surface of the tile. Guidance means such as a marker tag 8 or guidance strip 10 is embedded in the respective indentations 4 and 6. The guidance means provides information to a sensor means of an automatic guided vehicle (AGV) 32 (Figures 5 and 6) moveable over the tile. The information is usable for guidance of the AGV as will be familiar to persons skilled in the art.

It should be noted that where the guidance strip 10 and/or marker tags 8 are thin, they can be glued to the tile. Also, where the marker tag 8 is substantially the same width as a tile 2, a hole can be formed through the tile into which the marker tag is inserted. In this case, the tile may be retained by an interference fit or adhesive etc.

Guidance strip may comprise a magnetic strip 10a (Figure 2) which is arranged to be followed by a sensor on an AGV. Magnetic strip 10a therefore effectively forms a track to be followed by and AGV. Guidance strip 10 can be embedded in an indented groove on the top surface or underside of the tile. Alternatively, guidance strip may comprise a groove 10c formed in the surface of the tile or a guide bar 10b mounted to the tile. In the case of guide bar 10b or groove 10c, AGV 32 comprises a follower mechanism (not shown) adapted to follow the respective groove or bar. Bar 10b or groove 10c can also be used to guide a trolley being towed by the AGV.

Alternatively, guidance strip 10 could comprise one of the following:
1) a ridge formed on the surface of the tile;
2) a reflective material;
3) a wire for conveying electrical signals; or
4) a metallic strip.

In each of the above cases, the AGV comprises sensor means enabling the AGV to follow the guidance strip as will be familiar to person skilled in the art. For example, in the case of a metallic strip, the strip can be sensed by inductive sensors located on the AGV. In the case of a reflective material, the guidance strip is located on the top surface of the tile.

The guidance means may also comprise a marker tag 8. The marker tag 8 may be an RFID tag, reflective dot or magnetic dot that is arranged to provide routing information and/or instructions to perform a task to an automatic guided vehicle moving over the tile. Consequently, suitable sensor means (not shown) is provided on the AGV that is arranged to interact with the marker tag. The marker tags can incorporate a station number and zone number along with specific instruction codes that identify what an AGV should do on reading a code, for example stop and wait for a start signal from an operator, stop and wait for a start signal from a robot, alter speed to a specific value etc.

In the case of a passive RFID tag, the AGV 32 passing over the tile comprises an RFID tag reader (not shown) which transmits electromagnetic radiation to excite the RFID tag. In response to excitation, the RFID tag 8 transmits coded information which is usable to guide the movement of the AGV.

An example of the type of information provided could be routing information at a junction, the location of various work stations or locations at which to reverse etc. The AGV may comprise an onboard computer to interpret the sensed information, or can transmit the information to a remote computer and receive transmitted instructions. Consequently, the guidance strip is analogous to a track and the marker tags are analogous to signposts.

Tile 2 is laid on top of a floor 12. Preferably, magnetic strip 10a and marker tag 8 are disposed on the underside 3 of the tile. This provides the advantage of protecting the guidance means, i.e. the marker tag 8 and magnetic strip 10a, without having to embed the guidance means in concrete. Also, this helps prevent marker tag 8 being dislodged from the floor surface as a result of being kicked etc.

Referring to Figure 3, a plurality of tiles 2 are assembled into a flooring assembly. The guidance strip 10 forms a track to be followed by an AGV and marker tags 8 are disposed at points along the track to provide information usable for guiding an AGV moving along the track.

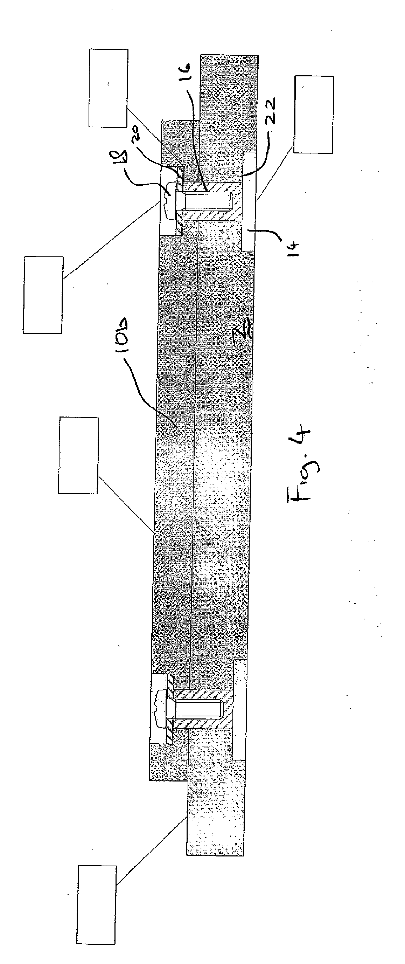

Referring to Figure 4, means for attaching a guidance bar 10b or other fixture to tile 2 comprises a collared pin 14 having an internal screwed thread 16 into which a bolt 18 can be screwed. A washer 20 is provided between the bolt and the collared pin 14. The collared pin is disposed in a cut-out 22.

Referring to Figures 5 and 6, a flooring assembly 30 comprises a plurality of tiles 2 comprising guidance means arranged to provide information to sensor means (not shown) of an AGV 32. Figure 6 is partially cut away to show the underside configurations of the tiles. Figure 5 shows tiles having guidance means being a different colour to the tiles 34 not having guidance means to provide a visual indication of the layout of the track to a person 36.

Figure 7 shows a representative set of tiles 40 from which any configuration of track can be assembled. Although the tiles shown are square, any quadrilateral, and preferably a regular quadrilateral shape could be used. Tiles in the shape of equilateral triangles or hexagons can also be used. Alternatively, a flooring assembly can be formed from several different shapes of tile if required.

The various configurations of the tiles in set 40 may comprise a marker tag only, guidance strip only or both marker tag and guidance strip. In Figures 3, 5, 6 and 7 the tiles are quadrilateral and the guidance strip forms one of the following configurations:
1) a path interconnecting to opposite sides of the quadrilateral;
2) a path interconnecting to adjacent sides of the quadrilateral;
3) a path interconnecting three adjacent sides of the quadrilateral by means of a substantially T-shaped junction; or
4) a path interconnecting all four sides of the quadrilateral by means of a crossroads.

The path can be continuous, but in practice, an AGV does not require a continuous path to follow. Small gaps in the track are possible. In fact, small gaps at the edges of the tiles make the tiles easier to manufacture.

From the Figure 7 embodiment, it can also be seen that none of the paths formed by the track bisect an edge of the tile, none of the paths follow a perpendicular bisector of the tile and none of the paths run along an edge of the tile. Even though this is shown in relation to a square, it should be understood that this can also apply to other quadrilateral shapes and shapes such as hexagons and triangles.

This offsetting of the track enables different track spacings to be achieved when the tiles are rotated. For example, in Figure 6, if the tiles forming the upper part of the track 2U are rotated through 180 degrees, this would bring the track closer to the lower part of track 2L forming a smaller track spacing. Consequently, the set of tiles shown in Figure 7 gives the user a large amount of choice and versatility when designing a track and choosing tiles. Set of tiles 40 therefore enables a flooring layout for any AGV system to be easily manufactured and designed.
The tiles described above enable the correct alignment or spatial relation ship between the guidance strip, marker tags and guidance bars or grooves to be maintained.

The tiles may comprise interconnection means (not shown) arranged on an outer periphery of the tiles to enable the tiles to be interconnected. The interconnection means may comprise for example a tongue and groove arrangement or interlocking tabs in the manner of a jigsaw. The tile assembly facilitates easy laying and removal of the flooring assembly. The flooring system can be lifted from the floor and removed and then re-laid at a new location if desired.

It will be appreciated by person skilled in the art that the above embodiments have been described by way of example only and not in any limitative sense, and that various alterations and modifications are possible without departure from the scope of the invention as defined by the appended claims.

## Claims

1. A floor tile comprising guidance means arranged to provide information to a sensor means of an automatic guided vehicle moveable over the tile, the information usable to guide the movement of said automatic guided vehicle, wherein the guidance means comprises:
a guidance strip that is arranged to be followed by an automatic guided vehicle; and
at least one marker tag arranged to provide routing information and/or instructions to perform a task to an automatic guided vehicle moving over said tile.

2. A floor tile according to claim 1, further comprising one or more of the following features:
a) wherein said guidance means is arranged on an underside of the tile;
b) at least one indentation formed in the floor tile into which at least one said marker tag is arranged to be embedded; or
c) a hole formed through the tile into which at least one said marker tag is arranged to be inserted.

3. A floor tile according to any one of the preceding claims, wherein at least one said marker tag comprises at least one radio frequency identification tag, or wherein at least one said marker tag comprises a reflective or magnetic dot.

4. A floor tile according to any one of the preceding claims, further comprising one or more of the following features:
d) wherein a path defined by the guidance strip does not bisect a straight edge of the floor tile;
e) wherein a path defined by the guidance strip does not follow a perpendicular bisector of the floor tile; or
f) wherein a path defined by the guidance strip does not run along an edge of the floor tile.

5. A floor tile according to claim 4, wherein the floor tile is quadrilateral and wherein a path defined by the guidance strip forms one of the following configurations:
g) a path interconnecting two opposite sides of the quadrilateral;
h) a path interconnecting two adjacent sides of the quadrilateral;
i) a path interconnecting three adjacent sides of the quadrilateral by means of a substantially T-shaped junction; or
j) a path interconnecting all four sides of the quadrilateral by means of a crossroads.

6. A floor tile comprising a guidance strip that is arranged to be followed by an automatic guided vehicle, wherein a path defined by the guidance strip:
does not bisect a straight edge of the floor tile;
does not follow a perpendicular bisector of the floor tile; and
does not run along an edge of the floor tile.

7. A floor tile according to claim 6, wherein the floor tile is quadrilateral and wherein a path defined by the guidance strip forms one of the following configurations:
g) a path interconnecting two opposite sides of the quadrilateral;
h) a path interconnecting two adjacent sides of the quadrilateral;
i) a path interconnecting three adjacent sides of the quadrilateral by means of a substantially T-shaped junction; or
j) a path interconnecting all four sides of the quadrilateral by means of a crossroads.

8. A floor tile according to claim 6 or 7, further comprising at least one marker tag arranged to provide routing information and/or instructions to perform a task to an automatic guided vehicle moving over said tile.

9. A floor tile according to claim 8, further comprising one or more of the following features:
k) wherein at least one said marker tag is arranged on an underside of the floor tile;
l) wherein at least one indentation is formed in the floor tile into which at least one said marker tag is arranged to be embedded; or
m) wherein a hole is formed through the tile into which at least one said marker tag is arranged to be inserted.

10. A floor tile according to claim 8 or 9, wherein at least one said marker tag comprises at least one radio frequency identification tag or wherein at least one said marker tag comprises a reflective or magnetic dot.

11. A floor tile according to any one of the preceding claims, wherein said guidance strip comprises one of the following:
n) a ridge formed on the surface of the tile;
o) a bar mounted to the tile;
p) a magnetic material;
q) a metallic material;
r) a reflective material; or
s) a wire for conveying electrical signals.

12. A floor tile according to any one of the preceding claims, further comprising one or more of the following features:
t) interconnection means arranged on an outer periphery of said tile to enable the tile to be interconnected to another tile;
u) wherein said interconnection means comprises a plurality of interlocking tabs; or
v) at least one collared pin projecting through an underside of the tile, the collared pin arranged to receive a bolt for attaching fixtures to the tile.

13. A flooring assembly comprising an arrangement of a plurality of floor tiles according to any one of the preceding claims laid alongside one another.

14. A flooring assembly according to claim 13, further comprising one or more of the following features:
w) a plurality of second tiles which do not comprise guidance means arranged to provide information to sensor means of an automatic guided vehicle moveable over the assembly; or
x) a plurality of second tiles which do not comprise guidance means arranged to provide information to sensor means of an automatic guided vehicle moveable over the assembly, wherein each said second tile has a colour different to the tiles of said plurality of floor tiles.

15. A method of laying a flooring assembly arranged to provide information to a sensor means of an automatic guided vehicle moveable over the flooring assembly, the information usable to guide the movement of said automatic guided vehicle, the method comprising laying a plurality of tiles according to any one of claims 1 to 12 alongside one other.
